# FASCICULE DE BREVET EUROPEEN

(11) **EP 0 741 670 B1**
(45) Date de publication et mention de la délivrance du brevet: **13.10.1999**
(21) Numéro de dépôt: 95907702.5
(22) Date de dépôt: 26.01.1995
(51) Int. Cl.: C02F 1/78

(54) **UNITE DE TRAITEMENT D'EAU PAR OZONATION COMPRENANT UNE INSTALLATION DE PRODUCTION D'EAU OZONEE**
WASSEROZONIERUNGSEINHEIT MIT EINER ANLAGE ZUR ERZEUGUNG VON OZONIERTEM WASSER
UNIT FOR TREATING WATER BY OZONATION COMPRISING AN OZONISED WATER PRODUCTION APPARATUS

(30) Priorité: 26.01.1994 FR 9401049
(43) Date de publication de la demande: 13.11.1996
(73) Titulaire: GIE ANJOU-RECHERCHE, F-75008 Paris (FR)
(72) Inventeur: FAIVRE, Michel, F-78260 Achères (FR); MARTIN, Nathalie, F-75013 Paris (FR); BOISDON, Vincent, F-62500 Clairmarais (FR)
(74) Mandataire: Vidon, Patrice
(86) Numéro de dépôt international: FR9500085
(87) Numéro de publication internationale: WO9520543

(56) Documents cités:
- EP-A- 0 436 409
- EP-A- 0 459 928
- EP-A- 0 550 152
- DE-A- 3 149 681
- GB-A- 2 023 565
- US-A- 3 699 776
- DATABASE WPI Section Ch, Week 0587 Derwent Publications Ltd., London, GB; Class D15, AN 87-033850 & JP,A,61 291 097 (FUJI ELECTRIC) , 20 Décembre 1986 & PATENT ABSTRACTS OF JAPAN vol. 11 no. 159 (C-423) ,22 Mai 1987
- ENVIRONMENTAL SCIENCE AND TECHNOLOGY., vol. 12, EASTON, PA US, page 470 R.D. NEUFELD ET AL. 'Ozonation of coal gasification plant wastewater'

## Description

L'invention concerne les traitements d'eau par ozonation, et plus particulièrement la mise au point d'un principe d'unité de traitement d'eau par ozonation incluant une installation de production de fluide ozoné.

L'utilisation de l'ozone, notamment dans les procédés de traitement de l'eau, à titre d'agent bactéricide et virulicide, est connue depuis longtemps. Ce composé est également utilisé dans les filières d'épuration des eaux au cours d'étapes de traitements combinés ozonation-coagulation, ozonation-flottation, ozonation-adsorption sur média filtrant (avec possibilité d'activité biologique sur le filtre), sans oublier les applications plus classiques telles que la déferrisation-démanganisation ou l'élimination de la couleur, des goûts et des odeurs des eaux traitées. Enfin, on sait que l'ozone possède une action oxydante sur un certain nombre de micropolluants (phénols, certains détergents,...) (voir B. Langlais, "Nouveau développement de l'ozonation en eau potable et technologie appropriée", L'eau; l'industrie, les nuisance, n°109, avril 1987, pp.28 à 30).

Afin de favoriser le contact de l'ozone gazeux avec l'effluent traité, il est classique d'employer des mélangeurs de types variés. Ces mélangeurs peuvent être constitués par des systèmes d'injection tels que des poreux, des diffuseurs déprimogènes, des émulseurs (encore appelés trompes à vides ou hydro-injecteurs), par des mélangeurs statiques, ou par des mélangeurs dynamiques (par exemple à agitateur ou à turbine entraînés).

Ces mélangeurs connus sont généralement situés en amont de cuves de contact (contacteurs) conçues de façon à maintenir, pendant une période de temps prédéterminée, le gaz oxydant en contact avec le flux de liquide à traiter.

A titre d'exemple, le brevet français FR 2662616 décrit une installation comprenant par exemple successivement un transféreur d'adjonction d'un gaz oxydant tel que l'ozone au liquide à traiter, un module de dissolution forcée de l'ozone dans le liquide et un module contacteur. Le module de dissolution forcée décrit dans ce document est constitué par un dispositif recirculateur constitué d'une cuve comprenant une première chambre centrale formant cheminée d'épuisement des gaz, et une seconde chambre annulaire de recirculation coaxiale à la cheminée d'épuisement. Les deux chambres sont séparées par une paroi et communiquent entre elles à leurs parties inférieure et supérieure de façon à permettre la recirculation du milieu de traitement par passage cyclique de l'une à l'autre.

Ces différents types de dispositifs présentent un certain nombre d'inconvénients. Ainsi, pour assurer un temps de contact minimal nécessaire pour la totalité du liquide à traiter, il faut maintenir un temps de passage moyen important dans les réacteurs. Ceci nécessite des ouvrages surdimensionnés, onéreux et consommateurs d'espace. De plus, ils n'autorisent généralement pas une bonne homogénéité de la répartition du gaz oxydant dans le milieu traité.

L'objectif de la présente invention est de fournir une installation permettant de fournir un fluide de traitement ozoné permettant une optimisation de la mise en contact de l'ozone avec un liquide à traiter tel que l'eau.

Un autre objectif de l'invention est de proposer une telle installation à rendement élevé.

Encore un autre objectif de l'invention est de fournir une unité de traitement d'eau équipée d'une telle installation nécessitant un volume réduit et optimisé de génie civil.

Un autre objectif de l'invention est de fournir une telle unité permettant de maximiser et d'homogénéiser le traitement de l'eau, notamment en vu de permettre sa désinfection et la flottation des matières organiques qu'elle contient à l'aide du fluide ozoné formé.

Enfin, encore un autre objectif de l'invention est de fournir une telle unité à temps minimisé de passage du liquide à traiter dans les réacteurs, tout en respectant les temps de contacts minimaux.

Un objectif particulier de l'invention est de permettre la libération dans l'eau traitée de microbulles d'ozone présentant une taille comprise entre environ 20 microns et 200 microns grâce à l'apport, dans le milieu traité, d'un fluide se présentant sous la forme d'eau blanche ozonée.

On rappelle que les termes "eau blanche" sont utilisés dans la technique pour désigner un mélange d'eau et d'air naissant obtenu par la détente d'un fluide pressurisé constitué par un mélange d'air et d'eau à l'équilibre à une pression déterminée. La couleur blanche de l'eau ainsi obtenue se réfère à la couleur que prend le mélange au moment de la détente de l'air.

Il a déjà été proposé dans l'état de la technique de mettre en oeuvre de l'eau blanche pour le décolmatage des membranes utilisées dans le cadre de la microfiltration ou de l'ultrafiltration de l'eau. Ainsi, la demande de brevet française n° 9109803 décrit un procédé de décolmatage comprenant une étape consistant à provoquer le passage d'un mélange d'eau et d'air sous pression à travers la membrane, selon un flux inverse au sens de filtration, en plaçant la chambre d'alimentation en dépression brusque par rapport à la chambre de récupération du perméat. La détente du mélange, notamment à l'intérieur des pores de la membrane permet de décolmater celle-ci.

L'invention a donc pour objectif de permettre la fabrication d'une eau blanche ozonée formée lors de la détente d'un mélange d'ozone et d'air à l'équilibre à une pression déterminée. On notera que jusqu'alors un tel mélange n'a pas été utilisé, l'ozone impliquant des conditions de manipulation notablement plus contraignante que celles de l'air.

Un objectif particulier de l'invention est de proposer une application intéressante d'un tel fluide consistant à l'utiliser, dans le cadre du traitement d'une eau à épurer, pour permettre la flottation des matières organiques qui y sont contenues.

Ces différents objectifs, ainsi que d'autres qui apparaîtront par la suite, sont atteints grâce à l'invention qui concerne une unité de traitement d'eau par ozonation caractérisée en ce qu'elle comprend d'une part au moins une installation de production d'eau blanche ozonée et d'autre part au moins un contacteur de façon telle que le mélange de l'eau à traiter et de l'eau blanche s'effectue dans ledit contacteur, ladite installation et ledit contacteur étant constitués par des réacteurs distincts reliés par une canalisation et en ce que ladite installation de production d'eau blanche ozonée comprend des moyens de dissolution sous pression d'ozone dans un liquide porteur, lesdits moyens de dissolution étant constitués par un ballon de pressurisation présentant une entrée dudit liquide porteur, une entrée d'ozone, une sortie sous pression du fluide produit et des moyens assurant la régulation de la pression à l'intérieur dudit ballon et la fuite continue des gaz non dissous dans ledit liquide porteur, le contacteur comprenant des moyens de détente de l'eau blanche ozonée issue de la sortie sous pression de ladite installation de production d'eau blanche ozonée, lesdits moyens de détente étant prévu en amont dudit contacteur. On notera que dans certains modes de réalisation, l'entrée d'ozone et l'entrée de liquide porteur dans le ballon de pressurisation pourront être confondues notamment lorsque ce ballon de pressurisation inclura un mélangeur statique.

Ce ballon de pressurisation pourra être avantageusement choisi dans le groupe constitué par les colonnes éjecteur, les colonnes à éjecteur et mélangeur statique, les colonnes à bulles, les colonnes à bulles utilisant le phénomène d'air lift, les colonnes à bulles agitées mécaniquement.

Une telle installation permet de fournir un fluide ozoné pouvant donner, lors de sa détente, des bulles d'ozone gazeux d'un diamètre extrêmement faible permettant une surface de contact très importante entre l'ozone et le fluide traité. L'augmentation de l'interface entre l'ozone et le fluide, par rapport aux techniques classiques d'ozonation, permet d'accroître de façon significative l'efficacité de ce composé et autorise une réduction notable du temps de contact nécessaire à sa mise en oeuvre. En pratique, une telle installation peut fournir une eau blanche ozonée dont les micro-bulles calibrées présentent une taille comprise notamment entre 20 et 200 micromètres.

On notera que US - A -3 699 776 décrit une unité de traitement d'eau potable incluant un réacteur de dissolution sous-pression d'ozone dans l'eau traitée.

GB - A - 2 023 565 décrit un procédé de traitement d'eau en vue de sa potabilisation dans laquelle l'eau est amenée sous pression en contact avec un mélange d'ozone et d'oxygène à l'intérieur d'une colonne garnie pour oxyder les constituants indésirables présents dans cette eau et pour améliorer la floculation de ces composants.

Ces documents ne divulguent aucune unité de fabrication d'eau blanche ozonée utilisée pour traiter une autre eau mais préconisent de traiter directement par l'ozone l'eau à potabiliser.

Préférentiellement, lesdits moyens permettant de réguler la pression dans ledit ballon comprennent par un déverseur. Un tel organe permet de maintenir une pression déterminée dans le ballon de pressurisation par l'intermédiaire d'une fuite continue des gaz non dissous dans le liquide porteur. Le maintien de cette pression permet ainsi d'optimiser la dissolution de l'ozone dans ce liquide jusqu'à la saturation de celui-ci tout en évitant l'accumulation d'ozone non dissous à l'intérieur du ballon de pressurisation. On notera toutefois, que l'on pourra aussi utiliser, à titre de moyens de régulation de la pression, d'autres éléments qu'un déverseur comme, par exemple, un détendeur ou un vanne motorisée pilotée par mesure de pression.

Egalement préférentiellement, ledit ballon de pressurisation présente dans sa partie supérieure un diffuseur dudit liquide porteur et, dans sa partie inférieure, un diffuseur d'ozone gazeux, ledit liquide porteur et l'ozone transitant à contre-courant dans ledit ballon de pressurisation et la sortie du fluide produit étant prévue dans la partie inférieure dudit ballon de pressurisation. Le diffuseur de liquide porteur pourra notamment être constitué par un élément d'arrosage tandis que le diffuseur d'ozone gazeux pourra être constitué par un poreux ou par un organe de diffusion assurant une diffusion homogène du gaz sur la section du ballon.

Avantageusement, ledit ballon de pressurisation comprend un matériau de garnissage favorisant le transfert de l'ozone gazeux dans ledit liquide porteur. Un tel matériau de garnissage pourra notamment se présentent sous forme d'anneaux en vrac tels que des anneaux de type Pall. De tels anneaux possèdent des ouvertures qui diminuent la résistance au débit gazeux et autorisent une perte de charge très réduite du liquide transitant dans le ballon de pressurisation. Le transfert de matière est amélioré par un meilleur accès à l'intérieur des anneaux.

Egalement avantageusement, l'installation comprend des moyens de régulation de la hauteur de liquide dans ledit ballon de pressurisation .

Selon une variante intéressante de l'invention, lesdits moyens de régulation comprennent une vanne de contrôle prévue en amont de ladite entrée de liquide porteur un détecteur de niveau prévu dans la partie inférieure dudit ballon de pressurisation et des moyens de transmission des mesures relevées par ledit détecteur à ladite vanne de contrôle. De tels moyens de transmission pourront être constitués par un transmetteur.

Préférentiellement, l'installation comprend en outre un ozoneur et des moyens de compression ou d'aspiration de l'ozone formé par ledit ozoneur. Un tel ozoneur pourra être constitué par n'importe quel dispositif permettant la fabrication d'ozone à partir d'oxygène dans un gaz vecteur (gaz ou autre mélange).

Egalement préférentiellement, lesdits moyens de compression d'ozone sont couplés à un réservoir tampon prévu en amont desdits moyens de compression, ledit réservoir tampon permettant de pallier les fluctuations de débit ainsi que les brusques variations de concentration à la sortie de l'ozoneur.

Avantageusement, l'installation comprend aussi une boucle de canardage prévue entre la sortie desdits moyens de compression et ledit réservoir tampon, ladite boucle permettant le déchargement en aval desdits moyens de compression, ainsi que la variation du débit dans une gamme souhaitée. Une telle boucle permet ainsi par exemple d'éviter le démarrage en charge du compresseur.

Préférentiellement, ledit ballon est pourvu de moyens de recirculation d'une partie du liquide porteur depuis la sortie sous pression vers l'entrée dudit ballon.

Egalement avantageusement, lesdits moyens de détente sont choisis dans le groupe constitué par les cavitateurs et les buses de pulvérisation.

Selon une variante intéressante de l'invention, lesdits moyens de compression sont choisis dans le groupe constitué par les compresseurs à membranes, les compresseurs secs et les pompes à anneaux liquides.

Egalement selon une variante de l'invention, l'installation comprend aussi des moyens de mesure de l'ozone dissous dans le fluide sous pression sortant dudit ballon de pressurisation.

L'installation comporte en outre avantageusement des moyens pour refroidir les gaz avant leur introduction dans le ballon. De façon préférentielle, ces moyens pour refroidir les gaz avant leur introduction dans le ballon sont constitués par un échangeur alimenté par un fluide caloporteur provenant d'un autre échangeur récupérant les frigories dégagées par la gazéification d'oxygène liquide.

Préférentiellement, ledit contacteur appartient au groupe comprenant les réacteurs de séparation (notamment et y compris avec membranes), de décolmatage (notamment de membranes de filtration), et en particulier les réacteurs de flottation et/ou d'ozoflottation. Dans le cas d'un réacteur de flottation, celui-ci pourra fonctionner à la pression atmosphérique et être par exemple équipé de lamelles ou de piège à bulles. On notera toutefois que le contacteur utilisé pourra également fonctionner sous pression. La pression régnant dans cet élément devra toutefois être inférieure à la pression du fluide sortant du ballon de pressurisation afin de permettre la formation de l'eau blanche ozonée.

Avantageusement, ledit contacteur est muni d'une canalisation permettant d'alimenter ledit ballon de pressurisation avec de l'eau sortant dudit réacteur faisant office de liquide porteur. Il est ainsi possible d'utiliser une partie de l'eau traitée comme liquide d'alimentation du ballon de pressurisation. Préférentiellement, des moyens de filtration (non représentés) sont prévus sur ladite canalisation.

L'unité de traitement comprend avantageusement des moyens de destruction ou de recyclage de l'ozone résiduel gazeux provenant dudit contacteur et/ou dudit ballon de production d'eau blanche ozonée.

Il est en outre bien entendu possible de réaliser les procédés d'oxydation avancée en ajoutant un additif, notamment du peroxyde d'hydrogène H2O2, un catalyseur, et/ou de réaliser le traitement sous rayonnement UV.

L'invention, ainsi que les différents avantages qu'elle présente, seront plus facilement compris grâce à la description qui va suivre d'un exemple non limitative de mise en oeuvre de celle-ci en référence aux dessins, dans lesquels :
- la figure 1 représente une unité de production d'eau blanche ;
- la figure 2 représente une installation de traitement d'eau incluant l'unité de production d'eau blanche selon la figure 1;
- les figures 3A à 3D représentent différents types de ballons de pressurisation pouvant être utilisés pour l'invention ;
- la figure 4 représente un autre mode de réalisation d'une installation de traitement d'eau incluant une unité de production d'eau blanche avec colonne à éjecteur et mélangeur statique.

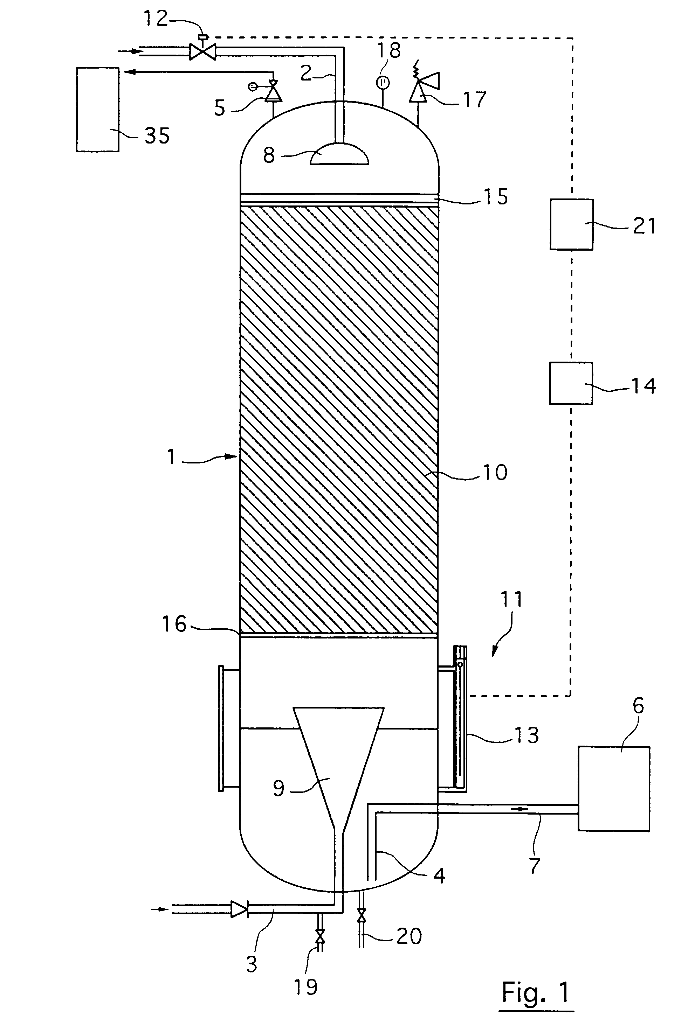

En référence à la figure 1, une installation de production d'eau blanche selon l'invention est essentiellement constituée par un ballon de pressurisation 1 permettant de délivrer un fluide sous pression et un moyen de détente 6 de ce fluide sous pression permettant la formation d'eau blanche ozonée.

La solution de réaliser le transfert dans un réacteur sous pression, à partir de gaz ozoné comprimé, a été sélectionnée plutôt qu'une aspiration de gaz ozoné par un émulseur de type Venturi qui ne permet pas de travailler à des ratios Gaz/Liquide suffisamment élevés et avec des pertes de charges acceptables.

Le ballon 1 forme colonne d'absorption et, afin d'obtenir à l'aide de ce contacteur gaz-liquide la dissolution maximale de l'ozone dans l'eau avec un minimum de perte, on a choisi une colonne à garnissage fonctionnant en régime dénoyé. L'eau et le gaz circulent à contre-courant, et le gaz appauvri en ozone est évacué en continu en tête du ballon de saturation.

Le ballon de pressurisation est équipé d'une entrée 2 de liquide porteur destiné à être saturé en ozone. Un tel liquide est avantageusement constitué par de l'eau. Le ballon 1 présente par ailleurs dans sa partie inférieure une entrée 3 d'ozone gazeux et une sortie 4 du fluide sous pression saturé en ozone. Afin de permettre une bonne répartition du liquide porteur à l'intérieur du ballon 1, un organe de diffusion 8 se présentant sous la forme d'un élément d'arrosage est installé au niveau de l'entrée 2. Par ailleurs, la diffusion homogène de l'ozone sur toute la section du ballon est assurée grâce à un poreux fritté 9.

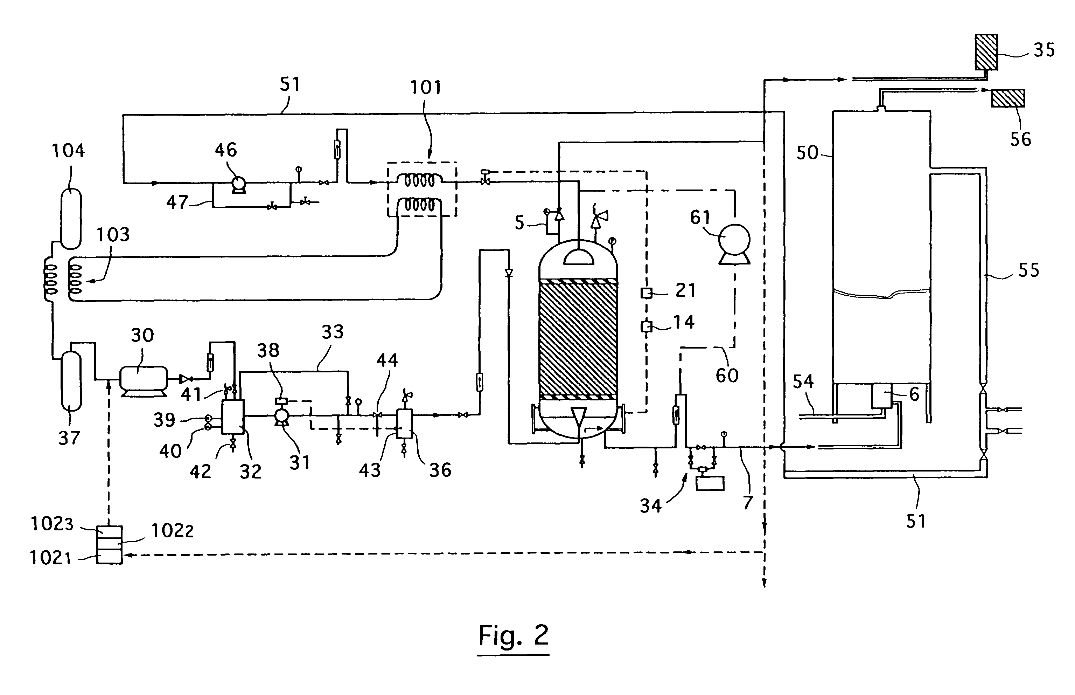

Avantageusement, on peut prévoir de refroidir les gaz avant leur introduction dans le ballon 1. En abaissant la température des gaz (sans bien entendu descendre en deçà du point de gel), permet en effet de diminuer la taille des bulles, et d'augmenter la solubilité de l'ozone, ce qui améliore le rendement de transfert.. Les moyens de refroidissement peuvent être constitués par un détendeur, ou encore par un échangeur 101 alimenté par un fluide caloporteur. De façon à rationaliser l'énergie nécessaire au fonctionnement du procédé, il peut être avantageux de refroidir le fluide caloporteur en profitant d'une source de frigories située en un autre point de l'unité de traitement. Ainsi, la chaîne de production d'ozone présente-t-elle généralement des moyens de réchauffage d'oxygène liquide issu de bouteilles 104 (avant le stockage de l'oxygène dans le ballon 37 en amont de l'ozoneur 30 - voir Fig.2), qui peuvent être couplés à un échangeur 103 servant à refroidir le fluide caloporteur précité.

De façon à favoriser et à optimiser le transfert de l'ozone gazeux dans le liquide porteur, une partie de l'intérieur du ballon est remplie par un matériau de garnissage en vrac 10 qui, dans le cadre du présent exemple de réalisation, est constitué par des anneaux de type Pall. On notera à ce sujet que d'autres types de matériau de garnissage en vrac pourront être utilisés et notamment des anneaux Raschig ou des anneaux cloisonnés. Ce matériau de garnissage est contenu dans sa partie supérieure par un plateau ajouré 15 favorisant la bonne distribution du liquide porteur sur toute la section du ballon et, dans sa partie inférieure par un support 16 également ajouré. L'intérieur du ballon de pressurisation 1 se trouve ainsi divisé essentiellement en trois zones : une zone supérieure dans laquelle se produit la distribution du liquide porteur, un zone médiane contenant le matériau de garnissage et une zone inférieure dans laquelle se produit la distribution de l'ozone gazeux et l'évacuation du fluide saturé en ozone. Le transfert de l'ozone dans le liquide porteur s'effectue donc à contre-courant.

On notera que le ballon peut aussi être adapté pour que le transfert ozone/liquide porteur s'effectue à co-courant.

Afin de maintenir une pression constante à l'intérieur du ballon de pressurisation, celui-ci est équipé d'un déverseur 5 organisant une fuite continue du gaz en excès non dissous dans le liquide porteur. Les évents récupérés lors du fonctionnement du déverseur 5 sont détruits grâce à un destructeur thermique 35.

Le ballon de pressurisation 1 est également équipé d'une soupape de sécurité 17 et d'un manomètre 18. On notera enfin que le ballon présente également dans sa partie inférieure une purge 19 au niveau de l'entrée d'ozone et une vidange 20.

Dans le but de maintenir constant le niveau de liquidc à l'intérieur du ballon 1, l'installation est pourvue de moyens de régulation 11. Ces moyens de régulation sont constitués essentiellement par une vanne de contrôle 12 prévue sur la canalisation d'entrée 2 du liquide porteur dans le ballon de pressurisation et par des moyens de mesure 13 du niveau de liquide à l'intérieur de ce ballon. Ces moyens de mesure 13 comprennent une sonde capacitive chargée d'évaluer la hauteur de liquide dans le ballon. Les mesures prises par cette sonde sont transmises, via des moyens de transmission 14, à des moyens de calcul 21. Ces moyens de calcul 21 peuvent agir sur l'ouverture nécessaire de la vanne de contrôle 13 pour atteindre l'équilibre recherché.

Lors de la mise en oeuvre de l'installation, il est donc ainsi possible de réguler la pression régnant à l'intérieur du ballon de pressurisation en agissant d'une part sur les gaz non dissous et d'autre part sur la quantité de liquide porteur entrant dans le ballon. On a pu constater que le rendement de transfert s'accroît avec la pression (à rapport des débits Qgaz/Qliquide constant), du fait de l'augmentation de la solubilité de l'ozone avec la pression.

A titre d'exemple. on peut prévoir d'établir dans le ballon 1 une pression de 2 à 10 bars. Le rapport des débits Qgaz/Qliquide peut être compris entre 50 et 200%, à titre indicatif. Les essais réalisés sur prototype ont montré qu'on atteint un palier d'ozone dissous pour un ratio compris entre 100 et 150 %. Le rendement de transfert apparaît décroître sensiblement linéairement avec l'augmentation du ratio Qgaz/Qliquide . Pour une concentration en ozone constante, on remarque que l'on obtient de meilleurs rendements en travaillant à pression moyenne (4 bars) et faible débit de gaz, plutôt qu'à pression plus forte (6 bars) et fort débit de gaz.

La figure 2 représente schématiquement une unité de traitement d'eau selon un premier mode de réalisation à deux étages. L'unité inclut principalement une installation de production d'eau blanche telle que décrite ci-dessus en référence à la figure 1 et un réacteur de flottation 50.

Une telle unité de traitement permet de réaliser la flottation d'une eau arrivant dans le réacteur de flottation 50 grâce à l'eau blanche fournie par l'installation prévue à cet effet. Dans ce but, l'unité comprend des moyens de détente 6 installés à l'extrémité de la canalisation 7 dans la partie inférieure du flottateur 50.

La canalisation 7 n'est pas représentée sur toute sa longueur mais pourra montrer une longueur de plusieurs mètres en cas de besoin. Une telle disposition permet la formation de l'eau blanche ozonée en un point éloigné de l'installation de traitement, en l'occurrence le réacteur 50 distant.

Les moyens de détente 6 sont constitués dans le présent exemple de réalisation d'un cavitateur permettant la transformation du liquide sous pression sortant du ballon en une eau blanche ozonée. Les essais menés ont permis d'établir que la création de bulles d'un diamètre faible, typiquement inférieur à 300 micromètres, doit se faire par désorption en milieu sursaturé en gaz. Les micro-bulles peuvent ainsi présenter un diamètre compris entre 20 et 200 micromètres environ pour une pression à l'intérieur du ballon de 3 à 6 bars et une pression environ égale à la pression atmosphérique à la sortie du cavitateur.

L'alimentation en eau à traiter de ce flottateur 50 est assurée par une canalisation 54.

L'installation de production d'ozone utilisée dans le cadre de l'unité représentée à la figure 2 comprend, outre le ballon de saturation, un ozoneur 30 permettant la fabrication d'ozone à partir d'oxygène provenant d'une réserve d'oxygène 37. L'ozoneur utilisé dans le cadre du présent exemple permet l'obtention de concentrations en ozone de l'ordre de 100 à 150 g/Nm³.

L'installation comprend par ailleurs un compresseur à membrane 31 équipé d'un variateur de fréquence pour la régulation débit/pression. Un tel compresseur autorise un pression de refoulement de l'ordre de 7 bars.

Un réservoir 32 assurant le rôle de tampon en amont du compresseur permet de pallier les fluctuations de débit, ainsi qu'aux brusques variations de concentrations pouvant se produire à la sortie de l'ozoneur 30. Ce réservoir qui présente une capacité de 20 litres est équipé d'indicateurs de pression 39 et de température 40 ainsi que d'une soupape 41 tarée à 1 bar permettant d'assurer la sécurité. Ce réservoir 32 est également équipé d'une vanne de vidange qui permettra de by-passer si nécessaire une partie du débit afin d'avoir toujours une pression comprise entre 0 et 0,1 bar relatif en amont du compresseur 31.

Le démarrage du compresseur 31 ne devant en aucun cas être effectué en charge, le circuit prévoit par ailleurs une boucle de canardage 33 permettant le déchargement en aval du compresseur. Un indicateur de pression 42 est prévu de façon à permettre le contrôle de la pression au refoulement de celui-ci.

Enfin, un ballon 36 assure la sécurité du compresseur 31 et de l'ozoneur 30. Ce ballon de sécurité 36 est pourvu d'une sonde capacitive 43 qui se déclenche en cas de présence d'eau. L'objectif de ce dispositif est de former une sûreté anti-retour, afin de proscrire absolument tout risque que de l'eau soit introduite vers l'ozoneur 30 qui fonctionne en haute tension. Le déclenchement de la sonde 43 entraîne la fermeture d'une électrovanne 44 situé entre le ballon 36 et le compresseur 31, l'arrêt du variateur de fréquence 38, et donc du compresseur et l'arrêt de l'ozoneur 30. Un tel ballon est par ailleurs équipé d'une soupape 45 permettant d'assurer sa propre sécurité.

L'installation de production d'eau blanche ozonée utilisée comprend également des moyens de mesure 34 de l'ozone dissous dans le fluide sous pression sortant du ballon de pressurisation.

Le circuit eau d'alimentation du ballon de pressurisation 1 comprend une canalisation 51 en provenance de la sortie du réacteur de flottation 50. En effet, dans le cadre du présente exemple, le liquide porteur utilisé par le ballon de pressurisation est constitué par une partie de l'eau traitée. Dans ce but, la canalisation 51 est branchée sur la canalisation de sortie 55 du flottateur 50.

Ce circuit eau comprend par ailleurs une pompe 46 et une boucle de canardage 47. La pompe permet de refouler l'eau à une pression de 8 bars. Pour assurer un bon équilibre des fluides dans le ballon, il faut en effet qu'en permanence, la pression de refoulement de l'eau soit supérieure à la pression régnant dans le ballon de pressurisation.

Dans un mode de réalisation avantageux, le ballon est pourvu de moyens de recirculation des fluides mis en contact, à savoir le liquide porteur et/ou le gaz ozoné.

Ainsi, il est avantageux de récupérer les rejets gazeux, qui contiennent encore de l'ozone, et qui peuvent être soit réutilisés immédiatement en un autre point de la chaîne de traitement, soit réacheminés en amont de l'ozoneur 30, à travers successivement un destructeur de l'ozone résiduel 102₁, un condenseur (avec purge) 102₂, et des moyens de dessiccation (par exemple sur alumine) 102₃, qui permettent le recyclage du gaz oxygéné.

Le temps de contact du liquide porteur avec l'ozone peut pour sa part être accru en prévoyant une conduite 60 de recirculation d'une partie du débit traité dans le ballon, à l'aide d'une pompe 61 .

Lors de la mise en oeuvre de l'unité de traitement représentée, l'installation de production d'eau blanche fournit en continu un fluide sous pression constitué par une eau sursaturée en ozone. Ce fluide transite par la canalisation 7 jusqu'au cavitateur 6 installé au pied du flottateur 50. La détente du fluide opérée grâce au cavitateur permet la libération continu de micro-bulles d'ozone de très petites tailles augmentant l'interface entre l'eau traitée et le gaz oxydant et optimisant ainsi l'action de celui-ci. L'action oxydante de l'ozone combinée au mouvement des bulles permet d'effectuer une excellente flottation de l'eau présente dans le flottateur.

Un destructeur catalytique 56 est prévu pour éliminer les résiduels d'ozone provenant du flottateur. Ces résiduels d'ozone peuvent aussi être recyclés vers l'ozoneur 30 comme mentionné précédemment.

Il convient de noter que le ballon de pressurisation utilisé pourra être constitué par une colonne à garnissage à contre-courant comme montrée en figures 1 et 2 mais aussi par d'autres types de colonnes.

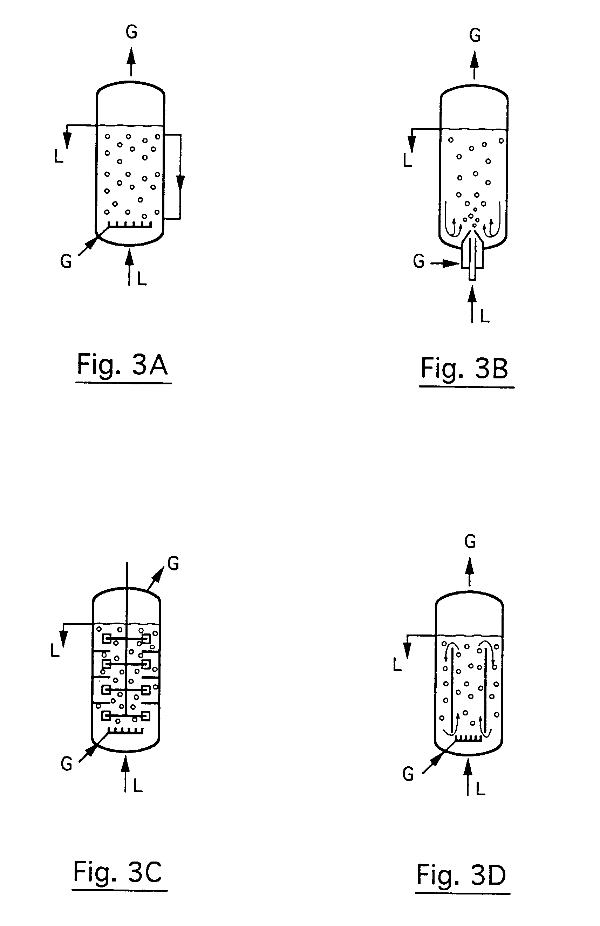

En référence à la figure 3, le ballon de pressurisation utilisé pourra ainsi être notamment constitué par une colonne à bulles (A), une colonne à éjecteur (B), une colonne agitée mécaniquement (C) ou encore une colonne à bulles utilisant le phénomène d'air lift (D).

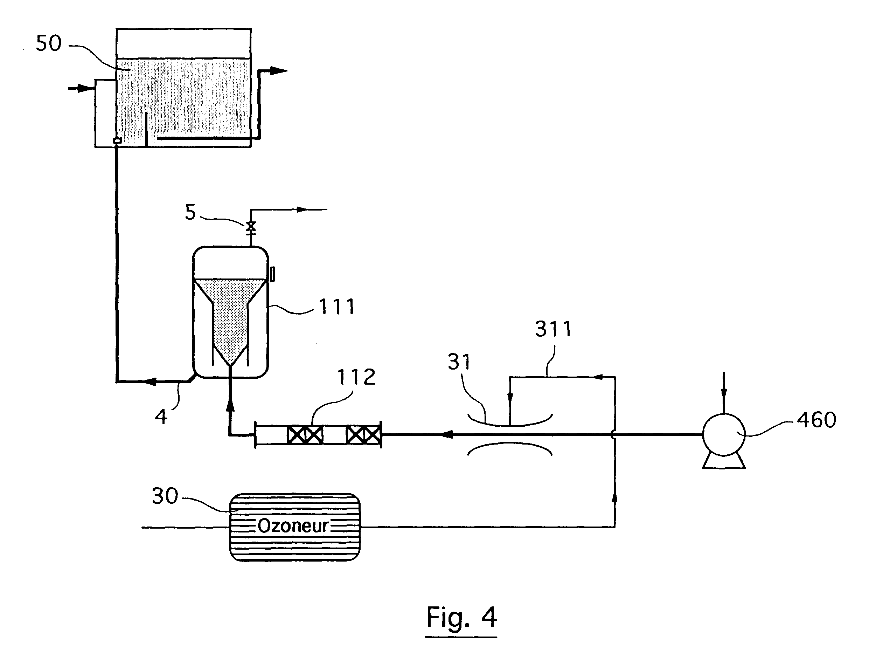

Ce ballon de pressurisation pourra aussi être constitué par une colonne à éjecteur 111 incluant un mélangeur statique 112 telle que représentée à la figure 4.

Selon cette figure, l'installation selon l'invention inclut un ozoneur 30 coopérant avec des moyens d'aspiration 311 de l'ozone formé et un compresseur de gaz à jet liquide 31. le fluide porteur est pompé par une pompe 460, le mélangeur intime du gaz et de ce liquide étant effectué au niveau du mélangeur statique 112.

Les modes de réalisation de l'invention ici décrit n'ont pas pour objet de réduire la portée de celui-ci. En particulier, il pourra être envisagé d'apporter des modifications aux éléments constituant l'installation de production d'eau blanche ozonée. On notera que l'installation de production d'eau blanche ozonée selon l'invention est notamment susceptible d'alimenter une unité d'ozoflottation telle que décrite et protégée notamment par le brevet français N°86 08780.

Il pourra également être envisagé d'utiliser une telle installation dans un autre cadre qu'une unité de flottation.

Avec l'installation de production d'eau blanche ozonée selon l'invention, on peut atteindre des concentrations en ozone dissous supérieures à 20 mg/l de liquide, et notamment jusqu'à par exemple 80 g/l (atteints en prototype).

## Revendications

1. Unité de traitement d'eau par ozonation caractérisée en ce qu'elle comprend d'une part au moins une installation de production d'eau blanche ozonée et d'autre part au moins un contacteur de façon telle que le mélange de l'eau à traiter et de l'eau blanche s'effectue dans ledit contacteur, ladite installation de production d'eau blanche ozonée et ledit contacteur (50) étant constitués par des réacteurs distincts reliés par une canalisation (7),
et en ce que ladite installation de production d'eau blanche ozonée comprend des moyens de dissolution sous pression d'ozone dans un liquide porteur, lesdits moyens de dissolution étant constitués par un ballon de pressurisation (1) présentant une entrée (2) dudit liquide porteur, une entrée (3) d'ozone, une sortie (4) sous pression du fluide produit et des moyens (5) assurant la régulation de la pression à l'intérieur dudit ballon (1) et la fuite continue des gaz non dissous dans ledit liquide porteur, le contacteur comprenant des moyens de détente (6) de l'eau blanche ozonée issue de la sortie (4) sous pression de ladite installation de production d'eau blanche ozonée, lesdits moyens de détente (6) étant prévus en amont dudit contacteur (50)..

2. Unité de traitement selon la revendication 1 caractérisée en ce que ledit ballon de pressurisation est choisi dans le groupe des réacteurs suivant : colonne à garnissage à conte-courant, colonne à éjecteur, colonne à éjecteur et mélangeur statique, colonne à bulles, colonne à bulles utilisant le phénomène d'air lift, colonnes à bulles agitée mécaniquement.

3. Unité de traitement d'eau selon l'une des revendications lou 2 caractérisée en ce que lesdits moyens (5) permettant de réguler la pression dans ledit ballon (1) sont choisis dans le groupe constitué par les déverseurs, les détendeurs et les vannes pilotées par mesure de pression.

4. Unité de traitement d'eau selon l'une des revendications 2 ou 3 caractérisée en ce que ledit ballon de pressurisation présente dans sa partie supérieure un diffuseur (8) dudit liquide porteur et, dans sa partie inférieure, un diffuseur (9) d'ozone gazeux, ledit liquide porteur et l'ozone transitant à contre-courant dans ledit ballon de pressurisation (1).

5. Unité de traitement d'eau selon l'une des revendications 2 à 4 caractérisée en ce que ledit ballon de pressurisation (1) comprend un matériau de garnissage (10) favorisant le transfert de l'ozone gazeux dans ledit liquide porteur.

6. Unité de traitement d'eau selon l'une des revendications 1 à 5 caractérisée en ce qu'elle comprend des moyens de régulation (11) de la hauteur de liquide dans ledit ballon de pressurisation (1).

7. Unité de traitement d'eau selon la revendication 6 caractérisée en ce que lesdits moyens de régulation comprennent une vanne de contrôle (12) prévue en amont de ladite entrée de liquide porteur, un détecteur de niveau (13) prévu dans la partie inférieure dudit ballon de pressurisation (1) et des moyens de transmission (14), à ladite vanne de contrôle, des mesures relevées par ledit détecteur.

8. Unité de traitement d'eau selon l'une des revendications 1 à 7 caractérisée en ce qu'elle comprend en outre un ozoneur (30) et des moyens de compression (31) ou d'aspiration (311) de l'ozone formé par ledit ozoneur.

9. Unité de traitement d'eau selon la revendication 8 caractérisée en ce que lesdits moyens de compression d'ozone (31) sont couplés à un réservoir tampon (32) et/ou à une électrovanne (44) en amont desdits moyens de compression, ledit réservoir tampon permettant de pallier les fluctuations de débit de pression ainsi que les brusques variations de concentration à la sortie de l'ozoneur (30).

10. Unité de traitement d'eau selon la revendication 9 caractérisée en ce qu'elle comprend une boucle de canardage (33) prévue entre la sortie desdits moyens de compression (31) et ledit réservoir tampon (32), ladite boucle permettant le déchargement en aval desdits moyens de compression (31), ainsi que la variation du débit dans une gamme souhaitée.

11. Unité de traitement d'eau selon l'une des revendications 1 à 10 caractérisée en ce que ledit ballon (1) est pourvu de moyens de recirculation d'une partie du liquide porteur depuis la sortie sous pression (4) vers l'entrée (2) dudit ballon (1).

12. Unité de traitement d'eau selon l'une des revendications 8 à 11 caractérisée en ce que lesdits moyens de compression sont choisis dans le groupe constitué par les compresseurs à membranes, les compresseurs secs et les pompes à anneaux liquides.

13. Unité de traitement d'eau selon l'une des revendications 1 à 12 caractérisée en ce qu'elle comprend des moyens de mesure (34) de l'ozone dissous dans le liquide sous pression sortant dudit ballon de pressurisation (1).

14. Unité de traitement d'eau selon l'une des revendications 1 à 13 caractérisée en ce qu'elle comprend des moyens (101) pour refroidir les gaz avant leur introduction dans le ballon (1).

15. Unité de traitement d'eau selon la revendication 14 caractérisée en ce que les moyens (101) pour refroidir les gaz avant leur introduction dans le ballon (1) sont constitués par un échangeur (101) alimenté par un fluide caloporteur provenant d'un autre échangeur (103) récupérant les frigories dégagées par la gazéification d'oxygène liquide (104) .

16. Unité de traitement d'eau selon l'une des revendications 1 à 15 caractérisée en ce que lesdits moyens de détente (6) sont choisis dans le groupe constitué par les cavitateurs et les buses de pulvérisation.

17. Unité selon l'une des revendications 1 à 16 caractérisée en ce que ledit contacteur (50) est muni d'une canalisation (51) permettant d'alimenter ledit ballon de pressurisation (1) avec de l'eau qui sort dudit contacteur et qui est destinée à être recyclée pour faire office de liquide porteur.

18. Unité selon la revendication 17 caractérisée en ce que des moyens de filtration sont prévus sur ladite canalisation (51).

19. Unité selon l'une des revendications 1 à 18 caractérisée en ce qu'elle comprend des moyens de destruction (35, 56), de recyclage (102) ou de réutilisation de l'ozone résiduel gazeux provenant dudit contacteur (50) et dudit ballon (1) de production d'eau blanche ozonée.

20. Unité selon l'une quelconque des revendications 1 à 19 caractérisée en ce que ledit contacteur (50) appartient au groupe comprenant les réacteurs de séparation, de colmatage, de flottation et/ou d'ozoflottation.

## Patentansprüche

1. Einheit zur Wasserbehandlung durch Ozonierung,
dadurch gekennzeichnet, daß sie einerseits mindestens eine Anlage zum Erzeugen von weißem, ozonierten Wasser umfaßt und andererseits mindestens eine Kontaktvorrichtung solcher Art, daß das Gemisch von zu behandelnder Wasser und von ozoniertem weißen Wasser in dieser Kontaktvorrichtung erfolgt, wobei die Anlage zum Erzeugen von weißem, ozonierten Wasser und die Kontaktvorrichtung (50) aus verschiedenen Reaktoren bestehen, die über eine Kanalisation (7) miteinander verbunden sind und,
dadurch, daß die Anlage zum Erzeugen von weißem, ozonierten Wasser die Mittel zum Lösen des Ozons unter Druck in einer Trägerflüssigkeit umfaßt, wobei die Mittel zum Auflösen aus einem Druckbehälter (1) bestehen, die einen Zulauf (2) für die Trägerflüssigkeit, einen Ozoneingang (3), einen Auslauf (4) der Produktflüssigkeit unter Druck sowie Mittel (5) aufweisen, welche die Druckregulierung im Inneren des Druckbehälters (1) und das stetige Ausweichen der in der Trägerflüssigkeit nicht gelösten Gase sicherstellen, wobei die Kontaktvorrichtung über Mittel zur Entspannung (6) des ozonierten weißen Wassers verfügt, das unter Druck aus dem Auslauf (4) der Anlage zum Erzeugen des weißen ozonierten Wassers fließt, wobei diese Mittel zur Entspannung (6) vor der Kontaktvorrichtung (50) angebracht sind.

2. Einheit zur Wasserbehandlung gemäß Anspruch 1,
dadurch gekennzeichnet, daß der Druckbehälter aus der folgenden Reaktorgruppe gewählt wird: Gegenstrom-Füllkörpersäule, Saugstrahlsäule, Saugstrahl- und statische Mischersäule, Blasensäule, Blasensäule, die das Airlift-Phänomen anwendet, mechanisch gerüttelte Blasensäule.

3. Einheit zur Wasserbehandlung gemäß einem der Ansprüche 1 oder 2,
dadurch gekennzeichnet, daß die Mittel (5), welche die Druckregulierung in dem Druckbehälter (1) ermöglichen, aus der Gruppe, der Überläufe, Entspannungsvorrichtungen und der druckmittelgesteuerten Ventile ausgewählt werden.

4. Einheit zur Wasserbehandlung gemäß einem der Ansprüche 2 oder 3,
dadurch gekennzeichnet, daß der Druckbehälter im oberen Teil einen Diffusor (8) für die Trägerflüssigkeit und im unteren Teil einen Diffusor (9) für gasförmiges Ozon aufweist, wobei die Trägerflüssigkeit und das Ozon im Gegenstrom in den Druckbehälter (1) fließen.

5. Einheit zur Wasserbehandlung gemäß einem der Ansprüche 2 bis 4,
dadurch gekennzeichnet, daß der Druckbehälter (1) ein Füllmaterial (10) enthält, welches die Übertragung des gasförmigen Ozons in die Trägerflüssigkeit begünstigt.

6. Einheit zur Wasserbehandlung gemäß einem der Ansprüche 1 bis 5,
dadurch gekennzeichnet, daß sie über Mittel (11) zum Einstellen des Flüssigkeitspegels in dem Druckbehälter (1) verfügt.

7. Einheit zur Wasserbehandlung gemäß Anspruch 6,
dadurch gekennzeichnet, daß die Mittel zum Einstellen ein Kontrollventil (12) umfassen, das vor dem Trägerflüssigkeitszulauf angebracht ist, ferner einen Pegeldetektor (13), welcher im unteren Teil des Druckbehälters (1) angebracht ist sowie Mittel (14) zum Übertragen der vom Detektor aufgenommenen Meßwerte an das Kontrollventil.

8. Einheit zur Wasserbehandlung gemäß einem der Ansprüche 1 bis 7,
dadurch gekennzeichnet, daß sie zusätzlich eine Ozonierungsvorrichtung (30) sowie Mittel zum Komprimieren (31) oder zum Absaugen (311) des in der Ozonierungsvorrichtung erzeugten Ozons umfaßt.

9. Einheit zur Wasserbehandlung gemäß Anspruch 8,
dadurch gekennzeichnet, daß die Mittel zum Komprimieren des Ozons (31) mit einem Pufferbehälter (32) und/oder einem Elektroventil (44) vor den Mitteln zum Komprimieren verbunden sind, wobei der Pufferbehälter das Ausgleichen der Druckschwankungen sowie der plötzlichen Konzentrationsschwankungen am Ausgang der Ozoniervorrichtung (30) ermöglicht.

10. Einheit zur Wasserbehandlung gemäß Anspruch 9,
dadurch gekennzeichnet, daß sie eine Kanal-Schleife (33) umfaßt, die zwischen dem Auslauf der Mittel zum Komprimieren (31) und dem Pufferbehälter (32) angebracht ist, wobei diese Kanal-Schleife das Entladen nach den Mitteln zum Komprimieren (31) sowie das Variieren des Durchsatzes innerhalb eines gewünschten Bereiches ermöglicht.

11. Einheit zur Wasserbehandlung gemäß einem der Ansprüche 1 bis 10,
dadurch gekennzeichnet, daß der Druckbehälter (1) über Mittel zum Rezirkulieren eines Teils der Trägerflüssigkeit vom Auslauf unter Druck (4) zum Eingang (2) des Druckbehälters (1) umfaßt.

12. Einheit zur Wasserbehandlung gemäß einem der Ansprüche 8 bis 11,
dadurch gekennzeichnet, daß die Mittel zum Komprimieren aus der Gruppe gewählt werden, welche Membrankompressoren, Trockenkompressoren und Flüssigkeitsringpumpen umfassen.

13. Einheit zur Wasserbehandlung gemäß einem der Ansprüche 1 bis 12,
dadurch gekennzeichnet, daß sie über Mittel zum Messen (34) des Ozons verfügt, welches in der unter Druck stehenden Flüssigkeit gelöst ist, die aus dem Druckbehälter (1) kommt.

14. Einheit zur Wasserbehandlung gemäß einem der Ansprüche 1 bis 13,
dadurch gekennzeichnet, daß sie über Mittel (101) zum Kühlen der Gase vor ihrer Einleitung in den Druckbehälter (1) verfügt.

15. Einheit zur Wasserbehandlung gemäß Anspruch 14,
dadurch gekennzeichnet, daß die Mittel (101) zum Kühlen der Gase vor ihrer Einleitung in den Druckbehälter (1) aus einem Austauscher (101) bestehen, der mit einem wärmeübertragenden Fluid gespeist wird, welches aus einem anderen Austauscher (103) kommt, das die Wärmeenergie aufnimmt, die bei der Vergasung des flüssigen Sauerstoffs (104) freigesetzt wird.

16. Einheit zur Wasserbehandlung gemäß einem der Ansprüche 1 bis 15,
dadurch gekennzeichnet, daß die Mittel zur Entspannung (6) aus der Gruppe , der Kavitationserzeuger und der Zerstäubungsdüsen ausgewählt werden.

17. Einheit zur Wasserbehandlung gemäß einem der Ansprüche 1 bis 16,
dadurch gekennzeichnet, daß die Kontaktvorrichtung (50) mit einer Kanalisation (51) versehen ist, die das Speisen des Druckbehälters (1) mit dem aus der Kontaktvorrichtung kommenden Wasser ermöglicht, welches rezykliert werden soll, um als Trägerflüssigkeit zu dienen.

18. Einheit zur Wasserbehandlung gemäß Anspruch 17,
dadurch gekennzeichnet, daß Filterungsmittel in der Kanalisation (51) vorgesehen sind.

19. Einheit zur Wasserbehandlung gemäß einem der Ansprüche 1 bis 18,
dadurch gekennzeichnet, daß sie über Mittel zur Zerstörung (35, 56), zum Rezyklieren (102) oder zum Wiederverwenden des verbleibenden gasförmigen Ozons aus der Kontaktvorrichtung (50) und aus dem Druckbehälter (1) zum Erzeugen des weißen ozonierten Wassers verfügt.

20. Einheit zur Wasserbehandlung gemäß einem der Ansprüche 1 bis 19,
dadurch gekennzeichnet, daß die Kontaktvorrichtung (50) zu der Gruppe gehört, welche die Reaktoren zum Trennen, zum Zusetzen, zum Aufschwemmen und/oder zum Aufschwemmen des Ozons umfaßt.

## Claims

1. Unit for the treatment of water by ozonisation, characterised in that it comprises, on the one hand, at least one installation for the production of ozonised white water and, on the other hand, at least one contactor such that mixing of the water to be treated and the white water takes place in the said contactor, the said installation for the production of ozonised white water and the said contactor (50) being made up of separate reactors linked by a line (7),
and in that the said installation for the production of ozonised white water comprises means for dissolving ozone, under pressure, in a carrier liquid, the said dissolving means being made up of a pressurisation vessel (1) having an inlet (2) for the said carrier liquid, an inlet (3) for ozone, an outlet (4) under pressure for the fluid produced and means (5) providing for regulation of the pressure inside the said vessel (1) and the continuous leakage of gases not dissolved in the said carrier liquid, the contactor comprising means (6) for letting down the ozonised white water that has issued from the outlet (4), under pressure, of the said installation for the production of ozonised white water, the said let-down means (6) being provided upstream of the said contactor (50).

2. Treatment unit according to Claim 1, characterised in that the said pressurisation vessel is chosen from the following group of reactors: counter-current packed column, ejector column, ejector column and static mixer, bubble column, bubble column using the air lift phenomenon and mechanically agitated bubble columns (sic).

3. Water treatment unit according to one of Claims 1 or 2, characterised in that the said means (5) enabling the pressure inside the said vessel (1) to be regulated are chosen from the group made up of dischargers, pressure reducing valves and valves controlled by pressure measurement.

4. Water treatment unit according to one of Claims 2 or 3, characterised in that the said pressurisation vessel has, in its upper part, a diffuser (8) for the said carrier liquid and, in its lower part, a diffuser (9) for gaseous ozone, the said carrier liquid and the ozone passing through in counter-current in the said pressurisation vessel (1).

5. Water treatment unit according to one of Claims 2 to 4, characterised in that the said pressurisation vessel (1) contains a packing material (10) promoting the transfer of gaseous ozone to the said carrier liquid.

6. Water treatment unit according to one of Claims I to 5, characterised in that it comprises means (11) for regulating the height of liquid in the said pressurisation vessel (1).

7. Water treatment unit according to Claim 6, characterised in that the said regulating means comprise a control valve (12) provided upstream of the said carrier liquid inlet, a level detector (13) provided in the lower part of the said pressurisation vessel (1) and means (14) for transmitting measurements taken by the said detector to the said control valve.

8. Water treatment unit according to one of Claims 1 to 7, characterised in that it also comprises an ozoniser (30) and means (31) for compression or means (311) for aspiration of the ozone formed by the said ozoniser.

9. Water treatment unit according to Claim 8, characterised in that the said ozone compression means (31) are coupled to a buffer reservoir (32) and/or to a solenoid valve (44) upstream of the said compression means, the said buffer reservoir enabling fluctuations in flow in pressure (sic) and sudden variations in concentration at the outlet from the ozoniser (30) to be reduced.

10. Water treatment unit according to Claim 9, characterised in that it comprises a blow-off loop (33) provided between the outlet from the said compression means (31) and the said buffer reservoir (32), the said loop enabling discharge downstream of the said compression means (31) as well as variation in the flow within a desired range.

11. Water treatment unit according to one of Claims 1 to 10, characterised in that the said vessel (1) is provided with means for recycling a portion of the carrier liquid from the outlet under pressure (4) to the inlet (2) of the said vessel (1).

12. Water treatment unit according to one of Claims 8 to 11, characterised in that the said compression means are chosen from the group made up by membrane compressors, dry compressors and liquid ring pumps.

13. Water treatment unit according to one of Claims 1 to 12, characterised in that it comprises means (34) for measuring the ozone dissolved in the liquid under pressure issuing from the said pressurisation vessel (1).

14. Water treatment unit according to one of Claims 1 to 13, characterised in that it comprises means (101) for cooling the gases before they are introduced into the vessel (1).

15. Water treatment unit according to Claim 14, characterised in that the means (101) for cooling the gases before they are introduced into the vessel (1) are made up of an exchanger (101) fed by a coolant fluid coming from another exchanger (103) recovering the negative kilocalories released by the gasification of liquid oxygen (104).

16. Water treatment unit according to one of Claims 1 to 15, characterised in that the said let-down means (6) are chosen from the group made up of cavitators and spray nozzles.

17. Unit according to one of Claims 1 to 16, characterised in that the said contactor (50) is equipped with a line (51) enabling the said pressurisation vessel (1) to be fed with the water that leaves the said contactor and that is intended to be recycled to serve as carrier liquid.

18. Unit according to Claim 17, characterised in that filtration means are provided in the said line (51).

19. Unit according to one of Claims 1 to 18, characterised in that it comprises means (35, 36) for the destruction of, means (102) for recycling or means for re-use of the residual gaseous ozone issuing from the said contactor (50) and from the said vessel (1) for the production of ozonised white water.

20. Unit according to any one of Claims 1 to 19, characterised in that the said contactor (50) belongs to the group comprising separation reactors, binding reactors, flotation reactors and/or ozoflotation reactors.
